# EUROPEAN PATENT SPECIFICATION

(11) **EP 2 384 961 B1**
(45) Date of publication and mention of the grant of the patent: **14.05.2014**
(21) Application number: 10171660.3
(22) Date of filing: 02.08.2010
(51) Int. Cl.: B62M 6/55, B62M 6/50

(54) **Power transmission mechanism for electric power-assist bicycle**
Kraftübertragungsmechanismus für Fahrräder mit elektrischem Hilfsantrieb
Mécanisme de transmission de puissance pour bicyclette à assistance électrique

(30) Priority: 04.05.2010 CN 201010162007
(43) Date of publication of application: 09.11.2011
(73) Proprietor: Chen, Geping, Guangdong 528226 (CN); Zhao, Yingquan, Guangdong 528226 (CN); Liao, Xinjun, Guangdong 528226 (CN)
(72) Inventor: Chen, Geping, Guangdong 528226 (CN); Zhao, Yingquan, Guangdong 528226 (CN); Liao, Xinjun, Guangdong 528226 (CN)
(74) Representative: Beck & Rössig European Patent Attorneys

(56) References cited:
- EP-A1- 1 193 171
- EP-A2- 1 466 824
- CN-A- 101 607 585
- JP-A- 2002 362 472

## Description

### FIELD OF THE INVENTION

The present invention relates to a power transmission mechanism for an electric power-assist bicycle.

### BACKGROUND OF THE INVENTION

Electric power-assist bicycle is defined as a bicycle driven mainly by pedaling power from a cyclist with an assistance of power from an electric motor. Control of the electric motor in the conventional electric power-assist bicycle is achieved through a pulse switching circuit sensing riding conditions of the cyclist. However, current signal of the pulse circuit is a transient electrical signal. A signal processor will instruct the assistant electric motor to accelerate immediately when receiving such transient electrical signal. Therefore, the electric power-assist bicycle with the pulse circuit will generate burst acceleration during riding process, which affects continuity and comfort of riding such bicycle.

Document CN 101 60 7585 discloses a similar mechanism.

Additionally, in the conventional electric power-assist bicycle, the electric motor rotates synchronously with the centre shaft due to structural reasons, no matter whether the centre shaft rotates clockwise or anti-clockwise. Thus in the case that the bicycle is driven only by power from the cyclist, pedaling of the cyclist drives the electric motor running synchronously, then magnetic resistance is generated since the rotator of the electric motor cuts magnetic lines of force, which cause riding of the cyclist is very difficult.

### SUMMARY OF THE INVENTION

The present invention is intended to provide a power transmission mechanism for an electric power-assist bicycle, which enables stable power transmission, no interference to braking, and easy riding.

According to an aspect of the present invention, as disclosed in claim 1, a power transmission mechanism for an electric power-assist bicycle is provided, comprising a shell, a centre shaft, a main chain wheel, a chain, a first bearing, a first one-way clutch, an assistant electric motor and a transmission chain wheel mounted on the electric motor, wherein the main chain wheel is connected with the transmission chain wheel via the chain; the main chain wheel is provided with said first bearing, through which the centre shaft passes; on the centre shaft, a torque cam mechanism with reset function is arranged, comprising a driving wheel being fixedly connected with a sliding sleeve; a driven wheel is fixedly connected with the main chain wheel; the first one-way clutch is mounted on the driving wheel, and the centre shaft passes through the first one-way clutch; a sensor device is arranged at a position corresponding to the sliding sleeve; and a signal processor is electrically connected with the sensor device and the electric motor.

Advantageously, said driving wheel is made of elastic material, and an open slot is formed along one side of each oblique tooth of the driving wheel and its root position; said sliding sleeve is fixedly connected with the oblique teeth of the driving wheel, and a second bearing is arranged on the other end of the driving wheel that is opposite to the end engaged with the main chain wheel.

Advantageously, an axial spline is formed on an outer ring of the first one-way clutch, and corresponding axial grooves are arranged on the inner side of the driving wheel; the outer ring is inserted into the driving wheel, with a stop edge formed on the other end of the outer ring that is opposite to the inserted end; a reset spring is arranged between the stop edge and the end surface of the driving wheel.

Advantageously, straight tooth engagement is provided on the engaged end surfaces of the driving wheel and the driven wheel, wherein straight notches are wider than the straight teeth.

Advantageously, the sensor device comprises a magnetic member and a sensor, one of the magnetic member and the sensor being mounted on the sliding sleeve, and the other being mounted on the shell.

Advantageously, said first one-way clutch is a ratchet mechanism.

Advantageously, a second one-way clutch is connected between a main shaft of the electric motor and the transmission chain wheel.

Compared with conventional electric bicycles, the electric power-assist bicycle in accordance with embodiments of the present invention has advantages as listed below: when force is applied to the pedals, torque force of the centre shaft is transmitted to the main chain wheel through the torque cam mechanism with reset function, then drives the sliding sleeve moving axially, causing the sensor device between the sliding sleeve and the shell generating a sensing signal. During this process, movement of the sliding sleeve and enhancement of the sensing signal are linear. Upon receiving the sensing signal, the signal processor instructs the electric motor to increase its rotating speed linearly, thus assistance power generated from the electric motor is increased softly, so as to improve comfort of riding the bicycle. Once the assistance power is cut off, stress applied on the torque cam mechanism disappears instantly as long as the pedaling force is removed, then the torque cam mechanism is reset instantly, the magnetic member moves away from the sensor until the magnetic member is out of the sensing range of the sensor. When the signal processor cannot receive signal from the sensor, it instructs the electric motor stop running immediately. This can avoid affecting braking in emergency situations. In addition, through the second one-way clutch arranged on the electric motor, magnetic field resistance generated from the main chain wheel driving the rotator of the electric motor rotating can be avoid when the bicycle is only driven by manpower, thereby pedaling of the bicycle becomes very easy.

### BRIEF DESCRIPTION OF THE DRAWINGS

The accompanying drawings illustrate one or more embodiments of the invention and, together with the written description, serve to explain the principles of the invention, and wherein:
Fig. 1 is a structural diagram of a power transmission mechanism for bicycle in accordance with a first embodiment of the present invention.
Fig. 2 is a structural diagram showing a main chain wheel mounted on a mainshaft in accordance with the first embodiment of the present invention.
Fig. 3 is a perspective explosive view of the power transmission mechanism in accordance with the first embodiment of the present invention.
Fig. 4 is a structural diagram showing a sliding sleeve in the power transmission mechanism in accordance with the first embodiment of the present invention.
Fig. 5 is a structural diagram of a power transmission mechanism for bicycle in accordance with a second embodiment of the present invention.
Fig. 6 is a structural diagram showing a driving wheel moved axially in the assistance status in accordance with the second embodiment of the present invention.
Fig. 7 is a structural diagram of the power transmission mechanism in accordance with the second embodiment of the present invention, wherein the sliding sleeve is partially removed.
Fig. 8 is a perspective explosive view of the power transmission mechanism in accordance with the second embodiment of the present invention.
Fig. 9 is a structural diagram showing a sliding sleeve in the power transmission mechanism in accordance with the second embodiment of the present invention.
Fig. 10 is a structural diagram showing the driving wheel in accordance with the second embodiment of the present invention.
Fig. 11 is a structural diagram showing an outer ring of the ratchet mechanism in accordance with the second embodiment of the present invention.
Fig. 12 is a structural diagram showing the sliding sleeve in the power transmission mechanism in accordance with the second embodiment of the present invention.

### DETAILED DESCRIPTION OF THE INVENTION

These and other aspects of the present invention will become apparent from the following description of the preferred embodiment taken in conjunction with the following drawings. It should be understood that the embodiments described here are only for the purposes of illustration and description and is not intended to be exhaustive or to limit the invention to the precise forms disclosed.

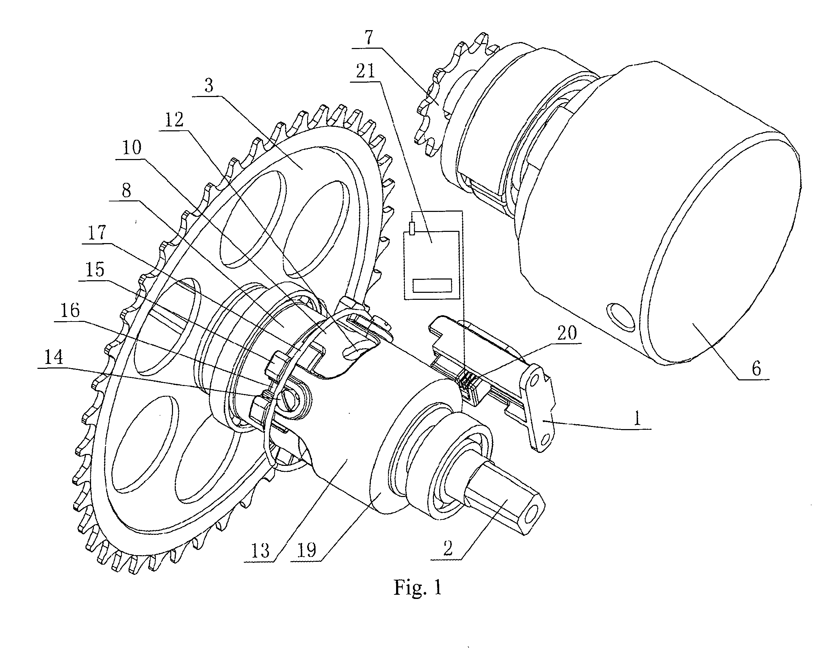

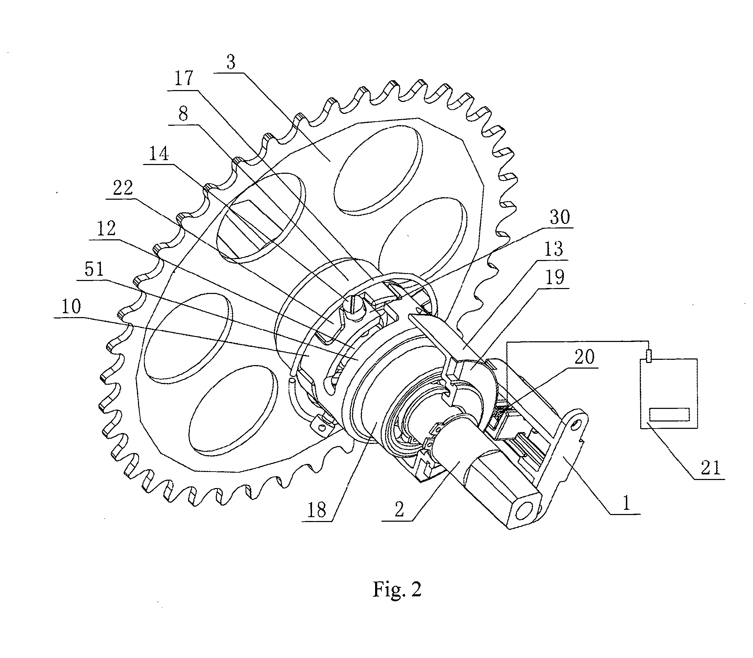

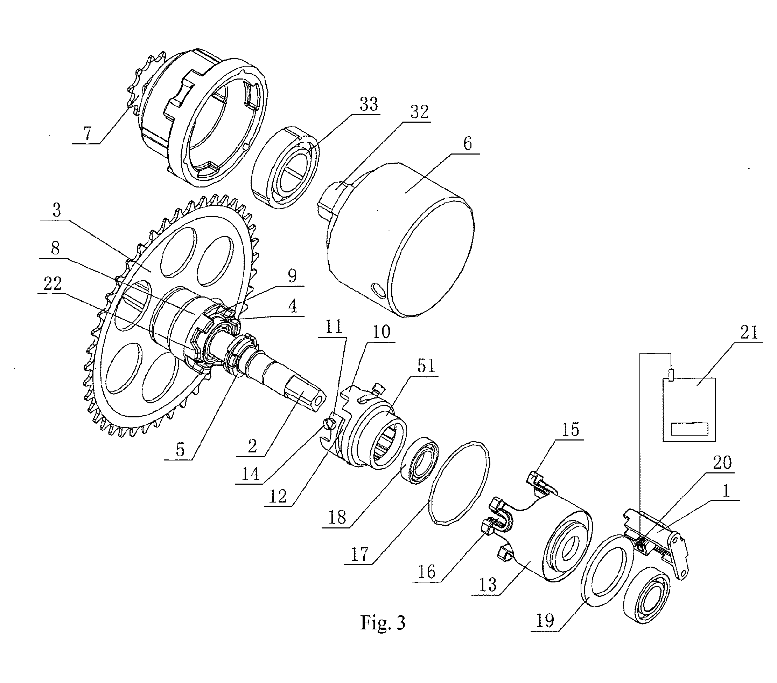

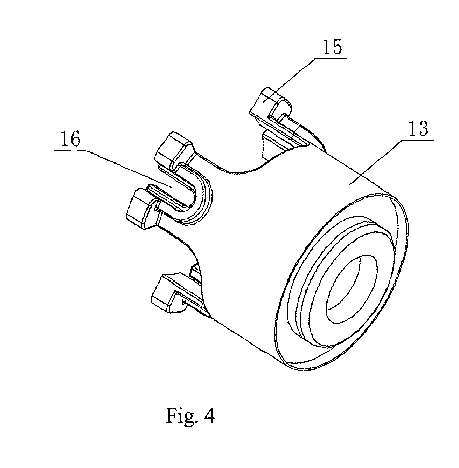

### Embodiment 1 (as shown in Figs. 1~4)

In this embodiment, the power transmission mechanism for electric power-assist bicycle comprises a shell 1, a centre shaft 2, a main chain wheel 3, a chain (not shown), a first bearing 4, a first one-way clutch, an assistant electric motor 6, a transmission chain wheel 7 mounted on the electric motor 6, wherein the first one-way clutch is an internally engaged ratchet mechanism 5. The chain connects to the main chain wheel 3, the transmission chain wheel 7 and a chain wheel of the bicycle wheels (not shown) simultaneity. The main chain wheel 3 is provided with a sleeve 8, which is connected with the centre shaft 2 via the first bearing 4. The ratchet mechanism 5 is mounted around the centre shaft 2. In this embodiment, an outer ring 51 of the ratchet mechanism 5 is just a driving wheel made of elastic material, while the sleeve 8 is a driven wheel. The outer ring 51 of the ratchet mechanism 5 is engaged with the sleeve 8 of the main chain wheel 3, and three groups of oblique tooth engagement and straight tooth engagement are circumferentially distributed and spaced by 120° on the engaged end surfaces of the outer ring 51 and the sleeve 8, wherein the straight notches 9 for the straight tooth engagement is a litter wider than the straight teeth 10, and the straight tooth engagement can restrict amplitude of the inter-movement between the two oblique teeth of the oblique tooth engagement, so as to avoid disengagement of the oblique teeth. Further, an open slot 12 is formed along one side of the oblique tooth 11 of the outer ring of the ratchet mechanism and its root position, which provides space for the axial deformation of the oblique tooth 11 when transmitting torque. A sliding sleeve 13 is arranged on the outer ring 51 of the ratchet mechanism, and a stop pin 14 is inserted and connected into each oblique tooth 11 of the outer ring 15. On one end of the circumferential surface of the sliding sleeve 13 which is engaged with the outer ring 51, flanges 15 are formed, and also slots 16 are arranged for the stop pins 14 being inserted into. When the stop pins 14 are inserted into the slots 16, a cramp ring 17 is arranged between the stop pins 14 and the flanges 15 to fixedly connect the outer ring 51 of the ratchet mechanism with the sliding sleeve 13. A second bearing 18 is close mounted on the other end of the outer ring 51 which is opposite to the end that is engaged with the main chain wheel 3. The second bearing 18 is functioned to cooperate with torque force from the centre shaft 2 during torque transmission, so as to make the main chain wheel 3 rotate together with the outer ring 51, in turn causing the oblique teeth 11 of the outer ring generating axial elastic deformation, which drives the sliding sleeve 13 moving axially. A magnet ring 19 is fixed installed on the other end of the sliding sleeve 13 that is opposite to the end engaged with the oblique teeth 11, and an unidirectional linear sensor 20 is arranged at a corresponding position in the shell 1, which is used to sense magnetic field strength of the magnet ring 19. The unidirectional linear sensor 20 is electrically connected to the signal processor 21.

An operation process of the power transmission mechanism is described as below. When a cyclist pedals the pedals of the bicycle, the centre shaft 2 generates torque, which is transferred to the outer ring 51 of the ratchet mechanism 5 under the action of the ratchet mechanism 5. Then through the oblique tooth engagement between the outer ring 51 and the sleeve 8 of the main chain wheel, the main chain wheel 3 rotates synchronously with the outer ring 51 and the sliding sleeve 13 which are fixedly mounted together with the main chain wheel 3 under a cooperation of the torque and the second bearing 18 located on the end of the sliding sleeve 13. Accompanied with rotation, the oblique teeth 11 of the outer ring generate axial elastic deformation, such deformation process drives the sliding sleeve 13 moving away the main chain wheel 3, and the magnet ring 19 linearly closing the unidirectional linear sensor 20. The unidirectional linear sensor 20 senses linear enhancement of the magnetic filed strength, and sends a instruction to the signal processor 21 to command the electric motor 6 linearly increasing its rotating speed. Thus assistance power generated from the electric motor 6 may be increased softly, so as to improve comfort of riding the bicycle. Once the assistance power is cut off, torque applied on the outer ring 51 of the ratchet mechanism disappears instantly as long as the pedaling force is removed. Then the oblique teeth 11 of the outer ring are reset instantly, the magnet ring 19 moves away from the unidirectional linear sensor 20 until the magnet ring 19 is out of the sensing range of the unidirectional linear sensor 20. When the signal processor 21 can not receive signal from the unidirectional linear sensor 20, it instructs the electric motor 6 stop running immediately.

The electric power-assist bicycle of the present invention could be provided with three riding modes, i.e., a manpower driving mode, an electric motor driving mode, and a combined driving mode of manpower and electric motor, and a mode switch is arrange on the handle. Detailed description to each operation mode is provided as below.

### 1. Combined driving mode of manpower and electric motor

Under action of both the man power pedaling and the electric motor 6, a transmission path of the torque generated from manpower pedaling is from the centre shaft 2 to the ratchet mechanism 5 and then to the main chain wheel 3. In this regard, sliding movement is generated along the slope between the oblique teeth 11 of the outer ring 51 and the oblique teeth 22 of the sleeve 8 of the main chain wheel. Such sliding movement causes the oblique teeth 11 of the outer ring 51 occurring axial elastic deformation, then in turn drives the sliding sleeve 13 moving axially. Therefore, the magnet ring 19 located on the sliding sleeve 13 moves close the unidirectional linear sensor 20. The unidirectional linear sensor 20 sends signal to the signal processor 21 based on the sensed magnetic field strength. The signal processor 21 instructs the electric motor 6 to run to assist the cyclist driving the bicycle. Of course, the magnet ring 19 is more close to the unidirectional linear sensor 20, the stronger the magnetic field strength sensed by the unidirectional linear sensor 20 is, and the signal processor 21 instructs the electric motor to increase its rotating speed so as to enhance the assistance power.

### 2. Manpower driving mode

In this manpower driving mode, the electric motor 6 is power off. When the cyclist pedals the bicycle, torque of the centre shaft 2 is transmitted in turn through the ratchet mechanism 5 and the sleeve 8 of the main chain wheel, then is transmitted to the main chain wheel 3. In this regard, although the oblique teeth 11 of the outer ring 51 generates axial elastic deformation, which drives the sliding sleeve 13 moving, then in turn causing the magnet ring 19 moving close the unidirectional linear sensor 20, the electric motor 6 will not generate assistance power in this mode since the electric motor 6 is power off.

### 3. Electric motor driving mode

Rotation of the electric motor 6 will transmit power to the bicycle wheels, meanwhile the electric motor 6 also drives the main chain wheel 3 rotating synchronously. In this statue, the ratchet mechanism 51 always keeps being engaged with the main chain wheel 3, then the main chain wheel 3 drives the outer ring 51 rotating together, but the centre shaft 2 will not rotate due to the existing of the ratchet mechanism 5. Feet of the cyclist could be putted on the pedals of the bicycle safely.

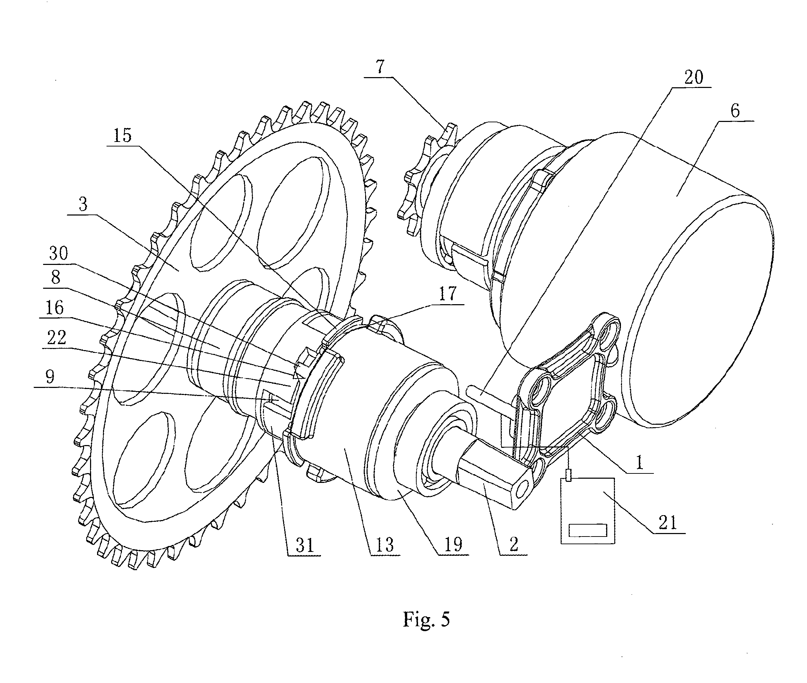

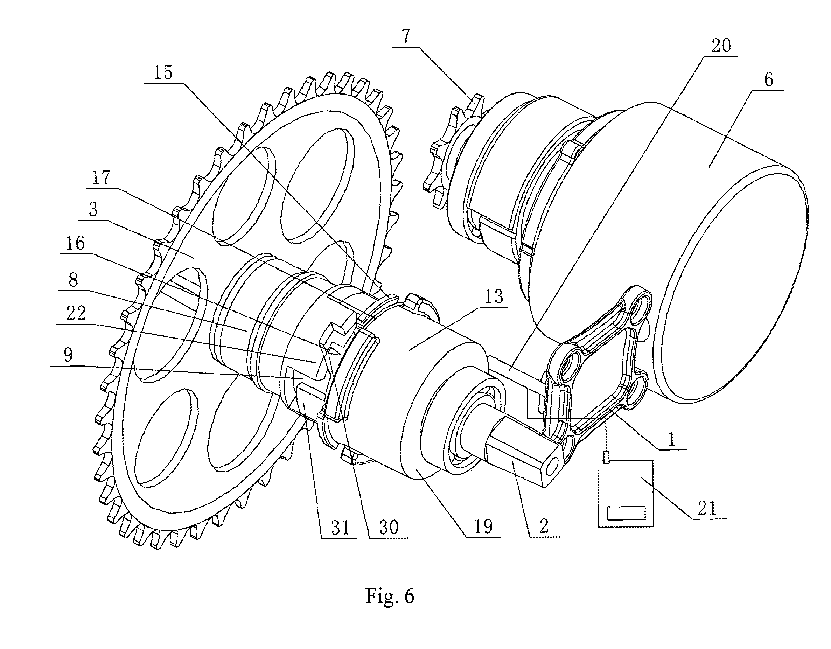

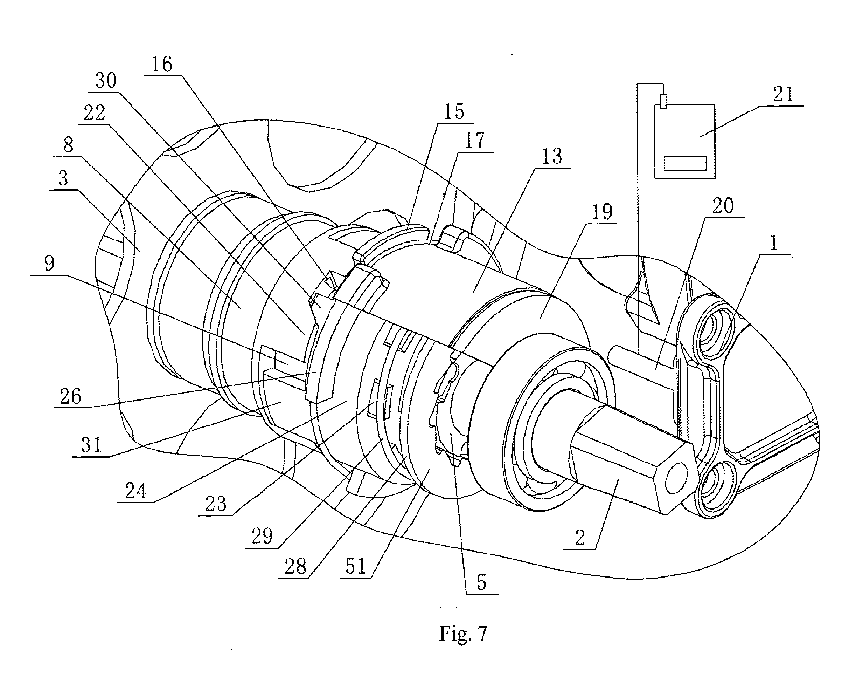

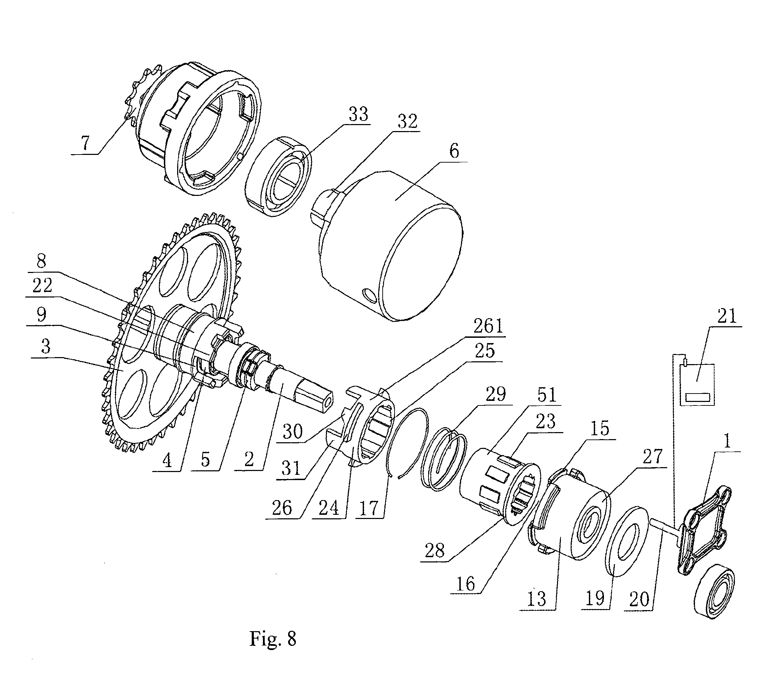

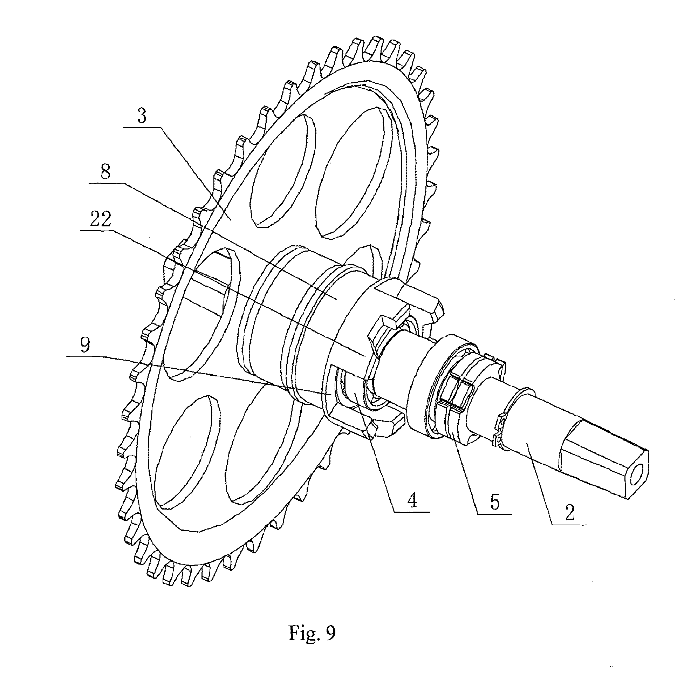

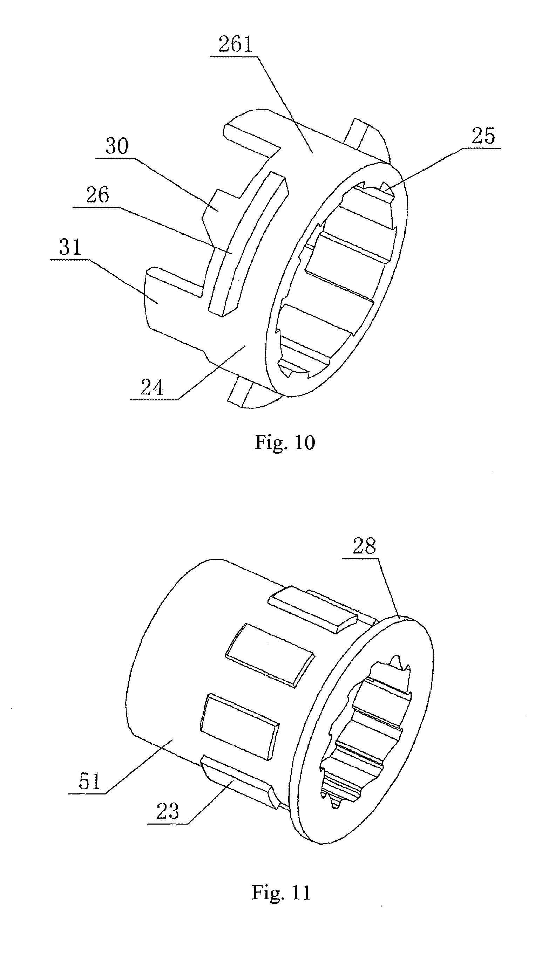

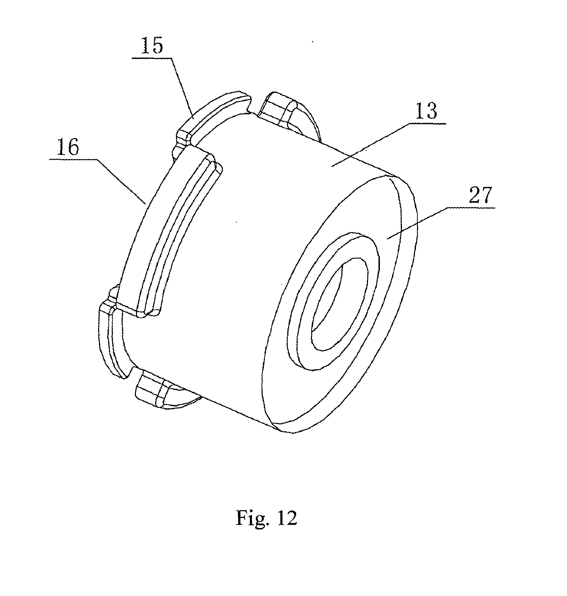

### Embodiment 2 (as shown in Figs. 5~12)

In this embodiment, the power transmission mechanism for electric power-assist bicycle comprises a shell 1, a centre shaft 2, a main chain wheel 3, a chain (not shown), a first bearing 4, a first one-way clutch, an assistant electric motor 6, a transmission chain wheel 7 mounted on the electric motor 6, wherein the first one-way clutch is an internally engaged ratchet mechanism 5. The chain connects to the main chain wheel 3, the transmission chain wheel 7 and a chain wheel of the bicycle wheels (not shown) simultaneity. The main chain wheel 3 is provided with a sleeve 8, which is connected with the centre shaft 2 via the first bearing 4. The sleeve 8 is a driven wheel in this embodiment. The ratchet mechanism 5 is mounted around the centre shaft 2. On the circumferential surface of the outer ring 51 of the ratchet mechanism 5, axial spline 23 is provided, and corresponding axial grooves 25are arranged on the inner side of the driving wheel 24. The outer ring 51 is inserted into the driving wheel 24, such that the spline 23 is positioned in the grooves 25, which enables the torque force being transmitted from the ratchet mechanism 5 to the driving wheel 24, and enables the driving wheel 24 being movable axially along the outer ring 51 of the ratchet mechanism. A sliding sleeve 13 is mounted around the outer circumference of the driving wheel 24, and the driving wheel 24 is provide with a connecting edge 26 around the circumference of the connected end of the drive wheel 24 with the sliding sleeve 13, the sliding sleeve 13 is provided with a flange 15. Gaps 261 and notches 16 are correspondingly formed on the connecting edge 26 and the flange 15 respectively. The driving wheel 24 is engaged with the sliding sleeve 13 through the connecting edge 26 and the notches 16, and the flange 15 and the gaps 261. Then a cramp ring 17 is arranged between the engaged connecting edge and the flange, to enable the driving wheel 24 being fixedly connected with the sliding sleeve 13. The other end of the sliding sleeve 13 that is opposite to the connecting end is provided with a circular lip 27 in the inner side, and the centre shaft 2 passes through the axis of the circular lip 27. The end of the outer ring 51 away the main chain wheel 3 is formed with a stop edge 28. A reset spring 29 is arranged around the outer ring 51 of the ratchet mechanism. When the driving wheel 24 is fixedly connected with the sliding sleeve 13, the outer ring 51 of the ratchet mechanism is pressed by the circular lip 27 of the sliding sleeve, and the reset spring 29 is compressed between the end surface of the driving wheel 24 and the stop edge 28 of the outer ring 51.

Engaged oblique teeth 22 and 30 are arranged on the opposite surfaces of the sleeve 8 of the main chain wheel and the driving wheel 24 respectively. In addition, straight teeth 31 are arranged on the end surface of the driving wheel 24, and corresponding straight notches 9 are formed on the end surface of the sleeve 8 of the main chain wheel. The straight teeth 31 is inserted into the straight notches 9, wherein the opening of the straight notches 9 is wider than the straight teeth 31, thus the rotation angle between the main chain wheel 3 and the driving wheel 24 is restricted. This can avoid the oblique teeth 22 on the sleeve of the main chain wheel being disengaged with the oblique teeth 30 of the driving wheel 24 due to excess rotation.

A magnet ring 19 is arranged at the outer side of the circular lip 27 of the sliding sleeve 13, and an unidirectional linear sensor 20 protrudes on the shell 1 toward the magnet ring 19. The unidirectional linear sensor 20 is electrically connected to the signal processor 21.

The electric power-assist bicycle of this embodiment is also provided with three riding modes, as introduced in the first embodiment. The power transmission process is described as below.

### 1. Combined driving mode of manpower and electric motor

Under action of both the man power pedaling and the electric motor 6, a transmission path of the torque generated from manpower pedaling is from the centre shaft 2 to the ratchet mechanism 5, then to the driving wheel 24, and then to the main chain wheel 3. In this regard, sliding movement is generated along the slope between the oblique teeth 30 of the driving wheel 24 and the oblique teeth 22 of the sleeve 8 of the main chain wheel. Such sliding movement causes the driving wheel 24 moving axially toward the unidirectional linear sensor 20. Therefore, the magnet ring 19 located on the driving wheel 24 moves close the unidirectional linear sensor 20. Other actions are similar as in the first embodiment.

### 2. Manpower driving mode

In this manpower driving mode, the electric motor 6 doesn't work. When the cyclist pedals the bicycle, torque of the centre shaft 2 is transmitted in turn through the ratchet mechanism 5 and the driving wheel 24, then is transmitted to the main chain wheel 3. In this regard, although the driving wheel 24 moves axially toward the unidirectional linear sensor 20 under the action the oblique teeth 22 and 30, then in turn causing the magnet ring 19 moving close the unidirectional linear sensor 20, power supply circuit of the electric motor 6 may be switched off via a mode switch on the handle. Therefore the electric motor 6 will not generate assistance power in this mode.

### 3. Electric motor driving mode

Rotation of the electric motor 6 will transmit power to the bicycle wheels, meanwhile the electric motor 6 also drives the main chain wheel 3 rotating synchronously. In this statue, the driving wheel 24 always keeps being engaged with the main chain wheel 3, while the main chain wheel 3 drives the driving wheel 24 rotating together, but the centre shaft 2 will not rotate due to the existing of the ratchet mechanism 5. Feet of the cyclist may be putted on the pedals of the bicycle safely.

With respect to the first embodiment and the second embodiment as described above, a second one-way clutch is connected between the main shaft 32 of the electric motor 6 and the transmission chain wheel 7. The second one-way clutch may be an overrunning clutch 33. In this regard, when rotation of the main shaft 32 of the electric motor 6 is used as main power, the main shaft 32 drives the transmission chain wheel 7 to rotate. In contrast, when rotation of the transmission chain wheel 7 is used as main power (i.e., in the manpower driving mode), the overrunning clutch 33 cuts off power transmitted from the driving chain wheel 7 to the main shaft 32 of the electric motor, to avoid the electric motor 6 generating ampere resistance, which increases physical consumption of the cyclist, when the bicycle is only driven by manpower.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A power transmission mechanism for an electric power-assist bicycle, comprising a shell (1), a centre shaft (2), a main chain wheel (3), a chain, a first bearing (4), a first one-way clutch (5), an assistant electric motor (6) and a transmission chain wheel (7) mounted on the electric motor (6), wherein
the main chain wheel (3) is connected with the transmission chain wheel (7) via the chain;
the main chain wheel (3) is provided with said first bearing (4), through which the centre shaft passes (2);
**characterized in that**,
on the centre shaft (2), a torque cam mechanism with reset function is arranged, comprising a driving wheel (51; 24) being fixedly connected with a sliding sleeve (13);
a driven wheel (8) is fixedly connected with the main chain wheel (3);
the first one-way clutch (5) is mounted between the driving wheel and the centre shaft (2);
a unidirectional linear sensor device is arranged at a position corresponding to the sliding sleeve (13); and
a signal processor (21) is electrically connected with the sensor device and the electric motor (6), whereby, when in power-assisted mode and torque is generated, axial movement of said sliding sleeve (13) causes said unidirectional linear sensor device (20) to generate a sensing signal so that the electric motor rotational speed is linearly increased.

2. The power transmission mechanism for an electric power-assist bicycle according to claim 1, wherein said driving wheel is made of elastic material, and an open slot (12) is formed along one side of each oblique tooth (11) of the driving wheel and its root position; said sliding sleeve (13) is fixedly connected with the oblique teeth (11) of the driving wheel, and a second bearing (18) is arranged on the other end of the driving wheel that is opposite to the end engaged with the main chain wheel (3).

3. The power transmission mechanism for an electric power-assist bicycle according to claim 1 or 2, wherein an axial spline (23) is formed on an outer ring (51) of the first one-way clutch, and corresponding axial grooves (25) are arranged on the inner side of the driving wheel; the outer ring (51) is inserted into the driving wheel, with a stop edge (28) formed on the other end of the outer ring (51) that is opposite to the inserted end; a reset spring (29) is arranged between the stop edge (28) and the end surface of the driving wheel.

4. The power transmission mechanism for an electric power-assist bicycle according to one of claims 1 to 3, wherein straight tooth engagement is provided on the engaged end surfaces of the driving wheel and the driven wheel, wherein straight notches (9) are wider than the straight teeth (31).

5. The power transmission mechanism for an electric power-assist bicycle according to one of claims 1 to 4, wherein the sensor device comprises a magnetic member and a sensor, one of the magnetic member and the sensor being mounted on the sliding sleeve (13), and the other being mounted on the shell (1).

6. The power transmission mechanism for an electric power-assist bicycle according to one of claims 1 to 5, wherein said first one-way clutch is a ratchet mechanism (5).

7. The power transmission mechanism for an electric power-assist bicycle according to one of claims 1 to 6, wherein a second one-way clutch is connected between a main shaft (32) of the electric motor (6) and the transmission chain wheel (7).

## Patentansprüche

1. Kraftübertragungsmechanismus für ein Fahrrad mit elektrischem Hilfsantrieb, umfassend ein Gehäuse (1), eine Zentralwelle (2), ein Haupt-Kettenrad (3), eine Kette, ein erstes Lager (4), eine erste Freilaufkupplung (5), einen elektrischen Hilfsmotor (6) und ein Kraftübertragungs-Kettenrad (7), das an dem Elektromotor (6) montiert ist, wobei
das Haupt-Kettenrad (3) über die Kette mit dem Kraftübertragungs-Kettenrad (7) verbunden ist;
das Haupt-Kettenrad (3) mit dem ersten Lager (4) versehen ist, durch das die Zentralwelle (2) verläuft;
**dadurch gekennzeichnet, dass**
an der Zentralwelle (2) ein Drehmomentnockenmechanismus mit Rückstellfunktion angeordnet ist, umfassend ein Antriebsrad (51; 24), das fest mit einer Gleithülse (13) verbunden ist;
ein angetriebenes Rad (8) fest mit dem Haupt-Kettenrad (3) verbunden ist;
die erste Freilaufkupplung (5) zwischen dem Antriebsrad und der Zentralwelle (2) montiert ist;
eine unidirektionale Linearsensor-Vorrichtung an einer Position angeordnet ist, die mit der Gleithülse (13) korrespondiert; und
ein Signalprozessor (21) elektrisch mit der Sensorvorrichtung und dem Elektromotor (6) verbunden ist, wodurch, wenn im Hilfsmotor-Modus ein Drehmoment erzeugt wird, eine axiale Bewegung der Gleithülse (13) die unidirektionale Linearsensor-Vorrichtung (20) dazu veranlasst, ein Messsignal zu erzeugen, so dass die Umdrehungsgeschwindigkeit des Elektromotors linear erhöht wird.

2. Kraftübertragungsmechanismus für ein Fahrrad mit elektrischem Hilfsantrieb nach Anspruch 1, wobei das Antriebsrad aus einem elastischen Material besteht und ein offener Schlitz (12) entlang einer Seite jedes schrägen Zahns (11) des Antriebsrades und seiner Grundposition ausgebildet ist; wobei die Gleithülse (13) fest mit dem schrägen Zahn (11) des Antriebsrades verbunden ist, und ein zweites Lager (18) an dem anderen Ende des Antriebsrades angeordnet ist, das sich gegenüber dem Ende befindet, welches mit dem Haupt-Kettenrad (3) in Eingriff steht.

3. Kraftübertragungsmechanismus für ein Fahrrad mit elektrischem Hilfsantrieb nach Anspruch 1 oder 2, wobei ein axialer Keil (23) an einem Außenring (51) der ersten Freilaufkupplung ausgebildet ist und entsprechende axiale Nuten (25) an der Innenseite des Antriebsrades angeordnet sind; der Außenring (51) in das Antriebsrad eingesetzt ist und eine Anschlagkante (28) an dem anderen Ende des Außenrings (51) ausgebildet ist, das sich gegenüber dem eingesetzten Ende befindet; eine Rückstellfeder (29) zwischen der Anschlagkante (28) und der Endfläche des Antriebsrades angeordnet ist.

4. Kraftübertragungsmechanismus für ein Fahrrad mit elektrischem Hilfsantrieb nach einem der Ansprüche 1 bis 3, wobei ein gerader Zahneingriff an den in Eingriff stehenden Endflächen des Antriebsrades und des angetriebenen Rades ausgebildet ist, wobei gerade Kerben (9) breiter als die geraden Zähne (31) sind.

5. Kraftübertragungsmechanismus für ein Fahrrad mit elektrischem Hilfsantrieb nach einem der Ansprüche 1 bis 4, wobei die Sensorvorrichtung ein Magnetelement und einen Sensor umfasst, von dem Magnetelement oder dem Sensor eines an der Gleithülse (13) und das andere an dem Gehäuse (1) montiert ist.

6. Kraftübertragungsmechanismus für ein Fahrrad mit elektrischem Hilfsantrieb nach einem der Ansprüche 1 bis 5, wobei die erste Freilaufkupplung ein Klinkenschaltwerk (5) ist.

7. Kraftübertragungsmechanismus für ein Fahrrad mit elektrischem Hilfsantrieb nach einem der Ansprüche 1 bis 6, wobei eine zweite Freilaufkupplung zwischen einer Hauptwelle (32) des Elektromotors (6) und dem Kraftübertragungs-Kettenrad (7) verbunden ist.

## Revendications

1. Mécanisme de transmission pour une bicyclette à assistance électrique comprenant une coque (1), un arbre central (2), un pignon principal (3), une chaîne, un premier palier (4), un embrayage à roue libre (5), un moteur d'assistance électrique (6) et un pignon de transmission (7) monté sur le moteur électrique (6), dans lequel
le pignon principal (3) est relié au pignon de transmission (7) par la chaîne;
le pignon principal (3) est équipé dudit premier palier (4) par lequel passe l'arbre central (2);
**caractérisé en ce que**,
un mécanisme de couple à cames avec une fonction de réinitialisation est arrangé sur l'arbre central (2), mécanisme comprenant
une roue d'entraînement (51; 24) qui est reliée de manière fixe à un manchon coulissant (13);
une roue motrice (8) qui est reliée de manière fixe au pignon principal (3),
le premier embrayage à roue libre (5) est monté entre la roue d'entraînement et l'arbre central (2);
un dispositif de capteur linéaire unidirectionnel est arrangé à une position qui correspond au manchon coulissant (13); et
un processeur de signal (21) est relié électriquement au dispositif de capteur et au moteur électrique, cependant que, lorsque le mode d'assistance électrique et de couple est généré, un mouvement axial dudit manchon coulissant (13) fait que le dispositif de capteur linéaire unidirectionnel (20) génère un signal de détection si bien que la vitesse de rotation du moteur électrique augmente de manière linéaire.

2. Mécanisme de transmission pour une bicyclette à assistance électrique selon la revendication 1 dans lequel ladite roue d'entraînement est faite en un matériau élastique et une fente ouverte (12) est formée le long d'un côté de chaque dent oblique (11) de la roue d'entraînement et de sa position de racine, ledit manchon coulissant (13) étant relié de manière fixe aux dents obliques (11) de la roue d'entraînement et un second palier (18) est arrangé à l'autre extrémité de la roue d'entraînement qui est en face de l'extrémité engrenée avec le pignon principal (3).

3. Mécanisme de transmission pour une bicyclette à assistance électrique selon la revendication 1 ou 2 dans lequel un spline axial (23) est formé sur une bague extérieure (51) du premier embrayage à roue libre et des rainures axiales correspondantes (25) sont arrangées sur le côté intérieur de la roue d'entraînement, l'anneau extérieur (51) est inséré dans la roue d'entraînement avec un bord d'arrêt (28) formé sur l'autre extrémité de la bague extérieure (51) qui est en face de l'extrémité insérée, un ressort de rappel (29) est arrangé entre le bord d'arrêt (28) et la surface d'extrémité de la roue d'entraînement.

4. Mécanisme de transmission pour une bicyclette à assistance électrique selon l'une des revendications 1 à 3 dans lequel l'engrènement à dent droite est créé sur les surfaces d'extrémité en prise de la roue d'entraînement et de la roue motrice, les encoches droites (9) étant plus larges que les dents droites (31).

5. Mécanisme de transmission pour une bicyclette à assistance électrique selon l'une des revendications 1 à 4 dans lequel le dispositif de capteur comprend un élément magnétique et un capteur, l'un de l'élément magnétique et du capteur étant monté sur le manchon coulissant (13) et l'autre étant monté sur la coque (1).

6. Mécanisme de transmission pour une bicyclette à assistance électrique selon l'une des revendications 1 à 5 dans lequel ledit premier embrayage à roue libre est un mécanisme d'encliquetage (5).

7. Mécanisme de transmission pour une bicyclette à assistance électrique selon l'une des revendications 1 à 6 dans lequel un second embrayage à roue libre est relié entre un arbre principal (32) du moteur électrique (6) et le pignon de transmission (7).
